(19) Europäisches Patentamt
European Patent Office
Office européen des brevets

(11) **EP 0 373 628 B1**

(12) # EUROPEAN PATENT SPECIFICATION

(45) Date of publication and mention
of the grant of the patent:
**18.03.1998 Bulletin 1998/12**

(51) Int Cl.$^6$: **G06F 7/60**, G06F 9/44

(21) Application number: **89123056.7**

(22) Date of filing: **13.12.1989**

(54) **Fuzzy apparatus**

Fuzzy-Gerät

Appareil à logique floue

(84) Designated Contracting States:
**AT BE CH DE ES FR GB GR IT LI NL SE**

(30) Priority: **14.12.1988 JP 315360/88**
**07.02.1989 JP 28373/89**

(43) Date of publication of application:
**20.06.1990 Bulletin 1990/25**

(60) Divisional application: **95120411.4 / 0 715 253**

(73) Proprietor: **OMRON CORPORATION**
**Kyoto (JP)**

(72) Inventors:
• **Tsutsumi, Yasuhiro**
**Omron Tateisi Electronics Co.**
**Nagaokakyo-shi Kyoto 617 (JP)**

• **Ohtsubo, Yutaka Omron Tateisi Electronics Co.**
**Nagaokakyo-shi Kyoto 617 (JP)**

(74) Representative: **WILHELMS, KILIAN & PARTNER**
**Patentanwälte**
**Eduard-Schmid-Strasse 2**
**81541 München (DE)**

(56) References cited:
**US-A- 4 837 725**

• **TRANSACTIONS OF THE INSTITUTE OF MEASUREMENT AND CONTROL vol. 10, no. 4, July 1988, DORKING GB pages 198 - 206 , XP000080413 EFSTATHIOU 'Expert systems, fuzzy logic and rule-based contgrol explained at last'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

## BACKGROUND OF THE INVENTION

### Field of the Invention

The present invention relates to a fuzzy control system development support apparatus and a method of supporting development of a fuzzy control system to be used in a construction of a fuzzy control system for facilitating development of the system.

### Description of the Related Art

In accordance with the fuzzy theory, it is possible to represent senses of human beings by utilizing membership functions as means to numerically express such senses.

The human senses characteristically change depending on situations and environments of the human being. For example, let us consider a temperature of water in a Japanese bath. Since the senses vary between the seasons of the year, the judgement of an appropriate temperature suitable for the bath changes depending on each season. In general, when the outdoor or environmental temperature is higher, a slightly warmer temperature of the water is likely to be desired. Namely, the suitable temperature is assumed such that a silghtly lower temperature and a slightly higher temperature are appropriate in summer and winter, respectively.

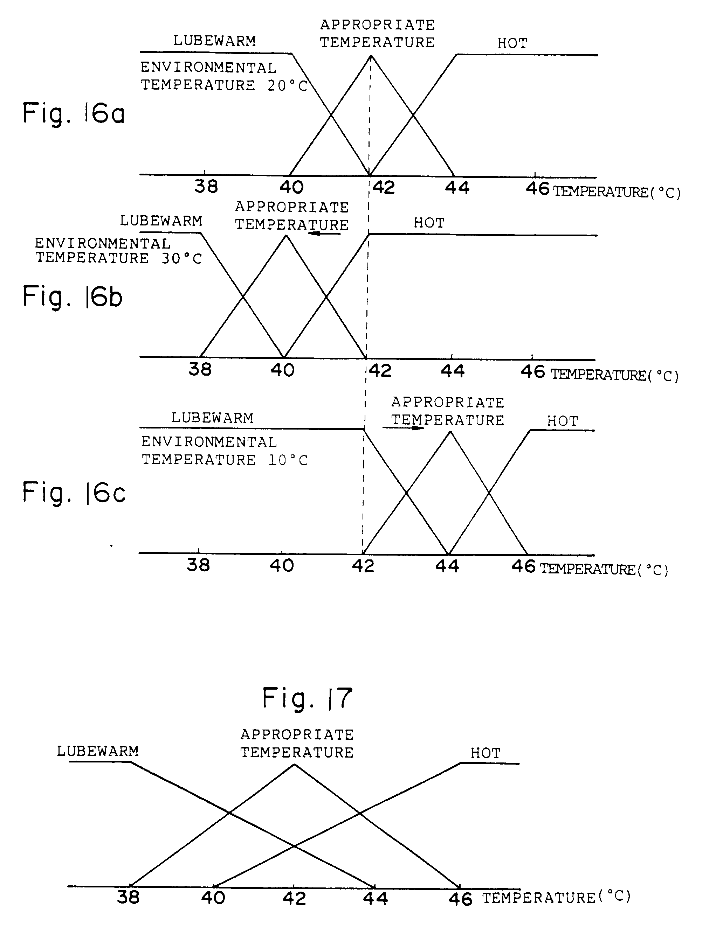

As describe above, owing to the difference in the sense with respect to the temperature of water, as shown in the graphs of FIGS. 16a to 16c, membership functions representing the appropriate temperatures of water develop different contours in association with environmental temperatures.

The graph of FIG. 16a shows a membership function developed when the environmental temperature is 20 °C in which when the temperature rises to 30°C, the graph shifts toward the direction of the lower temperature as shown in FIG. 16b, whereas when the temperature lowers to 10°C, the graph is displaced toward the direction of the higher temperature as shown in FIG. 16c.

The membership functions ; $\mu^{20}_A(t)$, $\mu^{20}_B(t)$, and $\mu^{20}_C(t)$ representing the senses of "lukewarm", "appropriate temperature", and "hot" at the environmental temperature 20°C are expressed as follows.

$$\mu^{20}_A(t) = [1 \wedge -1/2(t\text{-}42)] \vee 0 \qquad (1)$$

$$\mu^{20}_B(t) = [1/2(t\text{-}40) \wedge -1/2(t\text{-}44)] \vee 0 \qquad (2)$$

$$\mu^{20}_C(t) = [1/2(t\text{-}42) \wedge 1] \vee 0 \qquad (3)$$

In these expressions (1) to (3), $\wedge$ and $\vee$ denote MIN and MAX operations, respectively.

Similarly, the membership functions at the environmental temperatures 30° C and 10 °C are respectively represented by the following expressions (4) to (6) and (7) to (9).

$$\mu^{30}_A(t) = [1 \wedge -1/2(t\text{-}40)] \vee 0 \qquad (4)$$

$$\mu^{30}_B(t) = [1/2(t\text{-}38) \wedge -1/2(t\text{-}42)] \vee 0 \qquad (5)$$

$$\mu^{30}_C(t) = [1/2(t\text{-}40) \wedge 1] \vee 0 \qquad (6)$$

$$\mu^{10}_A(t) = [1 \wedge -1/2(t\text{-}44)] \vee 0 \qquad (7)$$

$$\mu^{10}_B(t) = [1/2(t\text{-}42) \wedge -1/2(t\text{-}46)] \vee 0 \qquad (8)$$

$$\mu^{10}_C(t) = [1/2(t\text{-}44) \wedge 1] \vee 0 \qquad (9)$$

In the conventional fuzzy system, a plurality of membership functions are required to be defined for the respective environmental temperatures in advance. If it is desired to establish correspondences with respect to all possible environmental temperatures, an infinite number of membership functions are required to be defined.

In order to cope with the variation in the sense above, there has been proposed a method in which the environmental temperature is assumed to be an element or a factor (an external disturbance) increasing ambiguity of the sense so as to adopt a membership function (as shown in FIG. 17) obtained through a composition utilizing a plurality of membership functions.

The graph of FIG. 17 shows membership functions developed when the environmental temperature deviates in a range from 10 °C to 30°C centered on 20 °C. The membership function representing the appropriate temperature extends in the water temperature range from 38°C to 46°C . When the width of the range is narrower, the ambiguity of the membership function expressing the suitable temperature is decreased. However, in the method associated with this graph, the membership function possesses an enlarged width, namely, an increased ambiguity, which leads to a problem that an appropriate inference cannot be easily accomplished.

Incidentally, in general, according to a fuzzy control, when an input signal is supplied, for example, form a sensor to a fuzzy inference apparatus, a group of fuzzy inference rules are used to achieve an inference operation such that based on a result of the inference operation of each inference rule, the apparatus decides a control operation of a control object. The fuzzy inference apparatus includes a fuzzy inference antecedent processing section and a fuzzzy inference consequent processing section, so that the inference outputs of the resepctive inference rules are fed from the consequent section to a concluding or composing section, which achieves a composition by use of the inference outputs. For example, an output of a definite or determinant value is generated so as to be delivered to the control object.

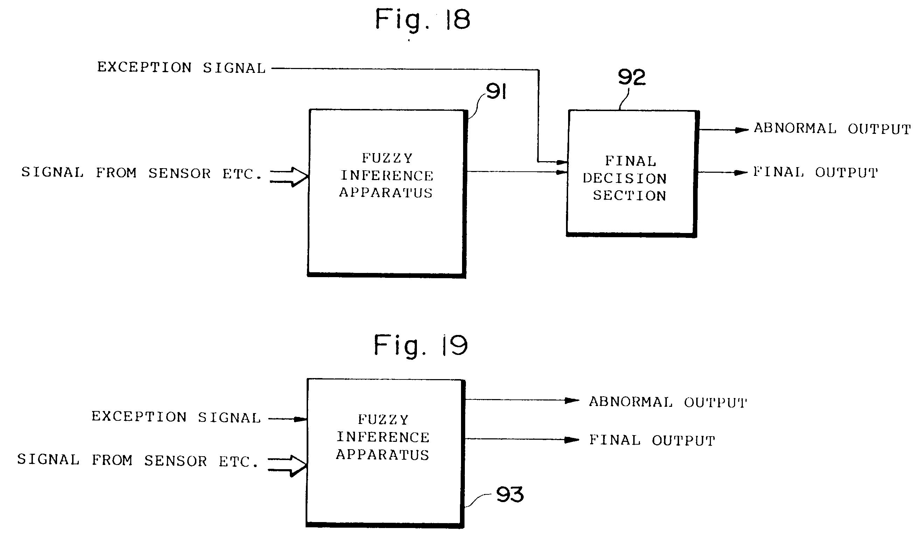

In the control system of this kind, there may occur a case where an abnormality signal is received from a sensor or the like or where a decrease in a signal level lowers the reliability of the input signal from the sensor. In such a situation, it is not appropriate to directly supply the control object with the determinant value output as the final output from the fuzzy inference apparatus. Consequenty, as shown in FIG. 18, a final decision section 92 is disposed on the output side of a fuzzy inference apparatus 91 so as to determine presence or absence of an exception signal such as an abnormality signal such that depending on the result of determination, the determinant output from the fuzzy inference apparatus 91 is delivered as the final output or an abnormality output is produced.

However, in such a method, there is required the final decision section 92, which necessitates excessive circuit configurations and devices and hence soars the cost of the apparatus.

In order to cope with the problem above, there has been employed a fuzzy inference apparatus 93 (shown in FIG 19) in which the inference rules include propositions or statements related to exception signals. In this method, however, the exception signals are required to be incorporated as propositions of the inference rules, which leads to a problem that the inference rules becomes to be complicated.

Furthermore, certainty of each inference rule can be determined by use of the membership function in the fuzzy inference antecedent and consequent processing sections. However, in a case where such certainty is desired to be altered, it is necessary to set a membership function for each inference rule, namely, the corresponding operation is troublesome.

When a fuzzy control system is to be configured for a control system, it is necessary to produce an application system including fuzzy inference rules and membership functions most suitable for the control system. In a case of development of an application system to conduct the fuzzy control by use of a microprocessor and a storage, data items of fuzzy inference rules and membership functions as well as fuzzy inference programs have been conventionally developed for each application.

However, because of necessities of development of the data items of fuzzy inference rules and membership functions and fuzzy inference programs for each application, the development efficiency is considerably lowered. Moreover, an evaluation of the fuzzy inference rules and the membership functions of the application thus developed cannot be accomplished without connecting the system to the actual control system. In consequence, the system development requires a very long period of time.

## SUMMARY OF THE INVENTION

It is therefore an object of the present invention is to provide a support apparatus and a support method which considerably improve the development efficiency of a fuzzy control system, thereby solving the difficulties above.

The fuzzy control system development support apparatus according to the present invention is defined in claim 1. The method of supporting development of a fuzzy control system according to the present invention is defined in claim 8.

In accordance with the present invention, since a support apparatus includes a knowledge base and a simulation section so as to set the contents of the knowledge base on a display screen, the inference simulation can be easily carried out and the alteration of the knowledge base is also considerably simplified. With the provision of the support apparatus configured as described above, there is completely removed the difficulty of the prior art technology that the evaluation of the fuzzy processing rules and the membership functions cannot be accomplished without connecting the application system to the actual machine. Namely, the evalution thereof can be conducted at a development stage by use of the support apparatus. Consequently, there is attained an advantage that a desired application can be developed in a very short period of time.

Furthermore, in accordance with the present invention, since an inference result can be produced for consecutive pseudo inputs so as to be stored in a memory, it is possible to employ the memory directly in an actual fuzzy controller. This provision leads to an advantage that the inference program development is unnecessitated.

In addition, according to the present invention, there is disposed a translator for translating the contents of the knowledge base into an arbitrary language such as the C language; consequently, the fuzzy system is quite advantageous for the development of application programs conforming to various kinds of microprocessors.

Furthermore, since the simulation results can be displayed as fuzzy rule adaptive degrees, the evaluation of the fuzzy processing rules are advantageously simplified to a considerable extent.

BRIEF DESCRIPTION OF THE DRAWINGS

These and other objects and advantages of the present invention will become apparent by reference to the following description and accompanying drawings wherein:

FIG. 1 is a schematic block diagram showing a configuration example of a fuzzy inference section to which the present invention is applied;

FIG. 2 is a functional block diagram showing the configuration of an embodiment according to the present invention;

FIG. 3 is a functional block diagram showing a software constitution of a fuzzy control system development support apparatus of the embodiment;

FIGS. 4 to 6 are diagrams schematically showing examples of display screens when a fuzzy processing rule and a membership function are edited;

FIG. 7 is a schematic diagram showing formulae representing a plant model;

FIGS. 8a to 8c are diagrams schematically showing flows of computations in a plant computing section;

FIG. 9 is a schematic diagram showing the configuration of a closed loop system associated with a control system simulation;

FIGS. 10 to 12 are diagrams schematically showing display examples of control system simulation results;

FIGS. 13 and 14 are diagrams respectively showing screens in which a control objective model and a control simulation environmental condition are set;

FIG. 15 is a flowchart of an operation to store in a target memory an output result from a support apparatus according to the present invention;

FIGS. 16a to 19 are diagrams schematically showing the related art;

FIGS. 16a to 16c are graphs showing states in which the shapes of membership functions alter depending on outdoor or environmental temperatures;

FIG. 17 is an explanatory diagram useful to explain an example of a membership function used in a fuzzy inference process; and

FIGS. 18 and 19 are block diagrams showing fuzzy inference apparatuses.

DESCRIPTION OF THE PREFERRED EMBODIMENTS

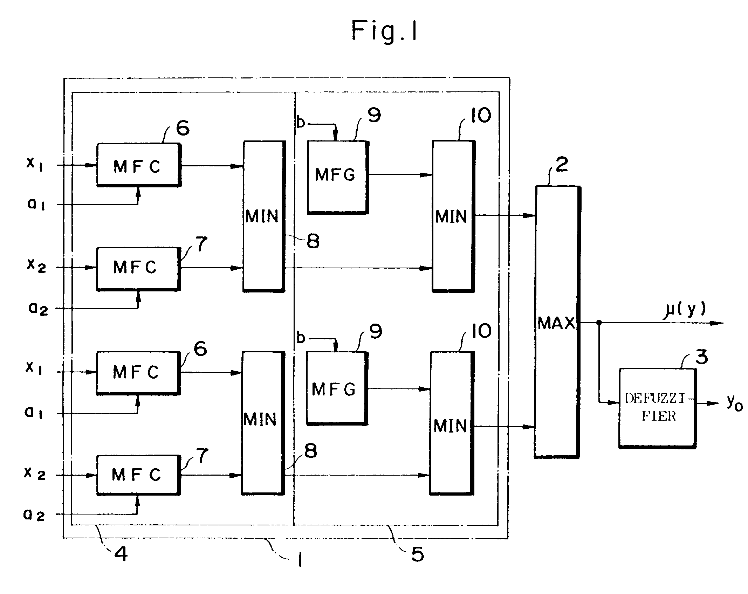

FIG. 1 is a diagram showing an example of the constitution of a fuzzy inference apparatus to which the present invention is applied.

The fuzzy inference apparatus is disposed, for example, to automatically control the temperature of water in a bath. However, the present invention is not restricted by this example, namely, is also naturally applicable to fuzzy inference systems associated with other purposes.

In this illustrative example, the fuzzy inference apparatus comprises a rule processing section 1, an MAX composing circuit 2, and a defuzzifier 3. The rule processing section 1 is supplied with two kinds of inputs $x_1$ and $x_2$ obtained by conducting sample and hold operations on signals from sensors or the like. By the way, the number of inputs is not necessarily limited to two, namely, the number may be one or may be three or more.

The rule processing section 1 includes an antecedent processing section 4 and a consequent processing section 5 for executing a fuzzy inference in conformity with a plurality of fuzzy processing rules. The antecedent processing section 4 comprises for each rule two membership function circuits (MFC) 6 and 7 and an MIN circuit 8. The consequent processing section 5 comprises for each rule a membership function generator (MFG) 9 and an MIN circuit 10.

The fuzzy processing rules are called "if, then" rules and are represented in this embodiment case as follows.

(Rule 1)
if $x_1 = X_{11}{}^{(a1)}$ and $X_2 = {}_{11}{}^{(a2)}$,
then $y = Y_1{}^{(b)}$
(Rule 2)
if $x_1 = X_{21}{}^{(a1)}$ and $X_2 = {}_{22}{}^{(a2)}$,
then $y = Y_2{}^{(b)}$

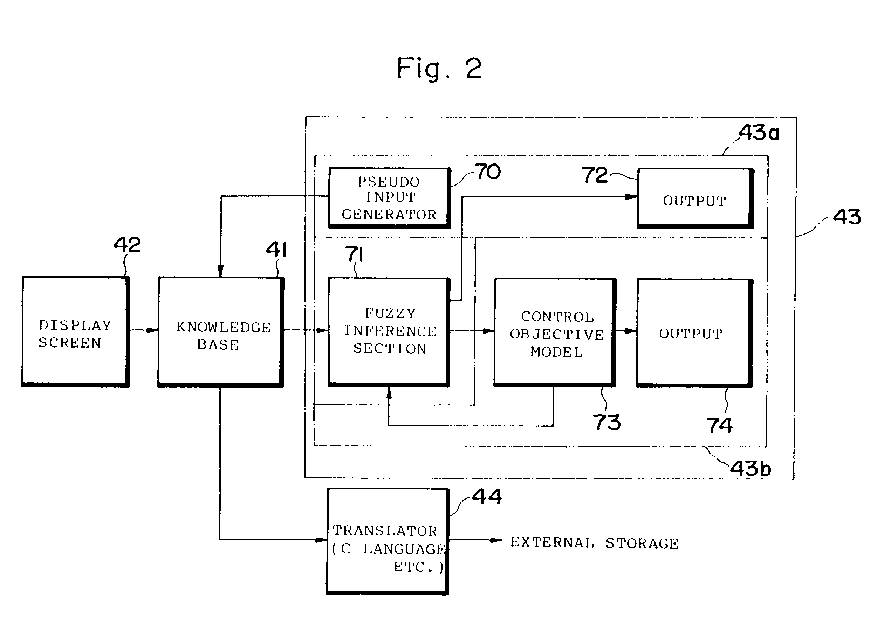

FIG. 2 shows the configuration of a fourth embodiment in accordance with the present invention. A knowledge base 41 is disposed to store therein fuzzy processing rules and membership functions, which are edited on a display screen 42. In the knowledge base, the fuzzy processing rules and the membership functions are not in the execution format and hence are converted into the execution format prior to an execution of a fuzzy inference associated therewith. A simulation section 43 is employed to achieve an inference simulation by use of the fuzzy processing rules and the membership functions stored in the knowledge base 41. In accordance with the present invention, the simulation section 43 comprises a simple inference simulation section 43a and a control system simulation section 43b. The simple inference simulation section 43a includes a pseudo input generator 70 for supplying a single pseudo input or consecutive pseudo inputs to the knowledge base 41. The simulation section 43 comprises as its central section a fuzzy inference section 71, which achieves a fuzzy inference on the pseudo input supplied from the pseudo input generator 70 to the knowledge base 41. For a single pseudo input or consequtive pseudo inputs, the fuzzy inference section 71 conducts a single inference or consecutive inference operations, respectively. A result of the inference is delivered as a fuzzy output and a determinant value to an output section 72, which includes a display screen and an external storage.

The control system simulation section 43b is constituted such that by use of a closed loop, a control objective model 73 established by supplying arbitrary parameters is linked with the fuzzy inference section 71, which is then connected to an output section 74. The control objective model 73 is represented with differential equations according to, for example, the Runge-Kutta method. Results of the simulation are attained by solving the differential equations of the model 73. The obtained simulation results are delivered to the output section 74 including the display screen.

Furthermore, in accordance with the present invention, there is disposed a translator 44 for a translation into the C language and the like, namely, the fuzzy processing rules and membership functions stored in the knowledge base 41 can be translated into the C language and the like. The results of the translation are stored, for example, in an external storage.

Moreover, in accordance with the present invention, the output section 74 for outputting the simulation results attained by the control system simulation section 43b includes means for successively outputting the simulation results as fuzzy processing rule adaptive degrees to a display screen or the like. With the provision of this means, it is possible to easily evaluate the adaptive degrees and the like of the fuzzy processing rules on the display screen or the like.

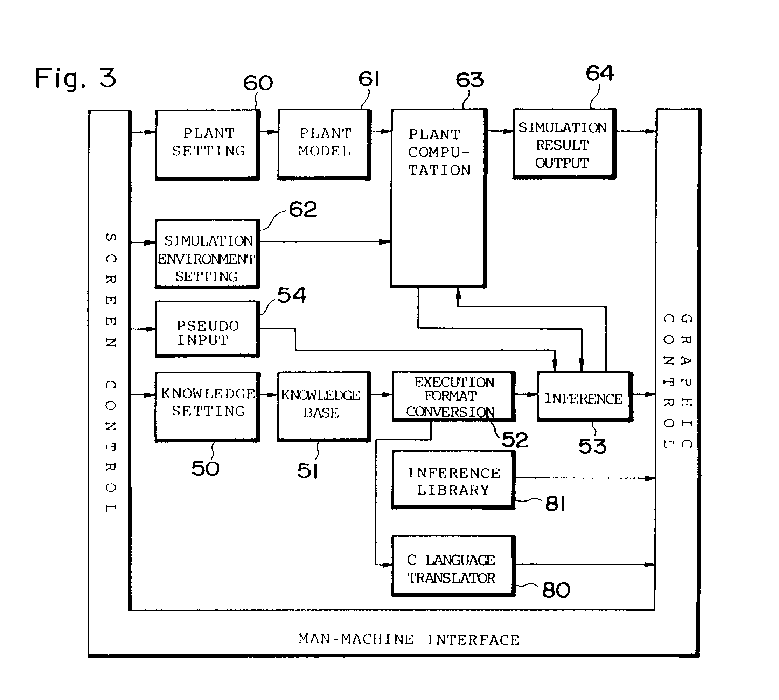

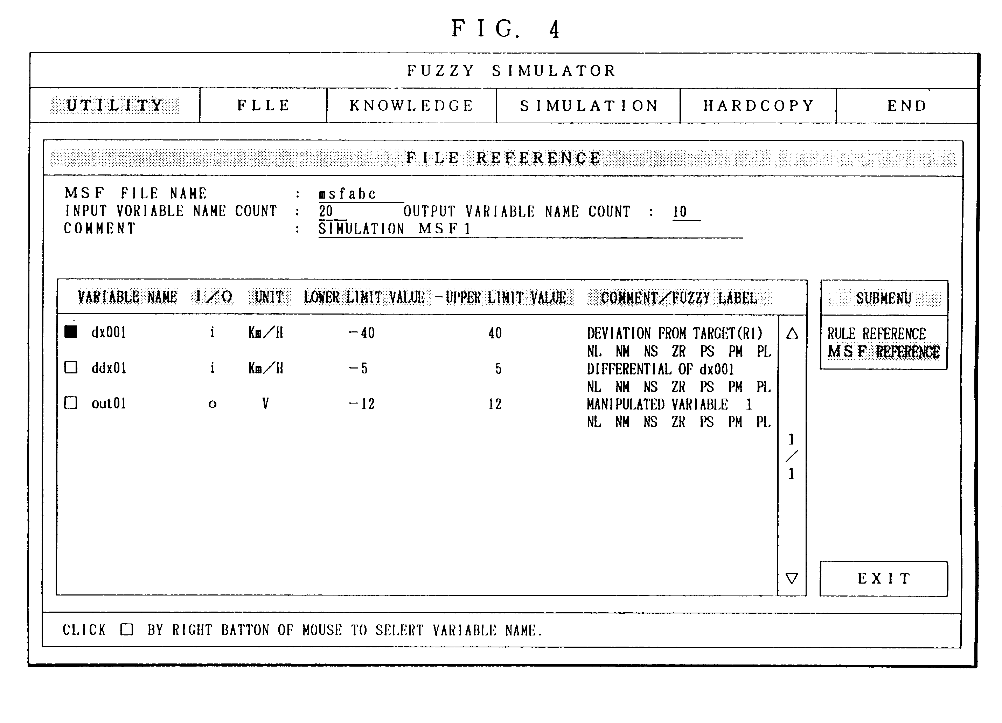

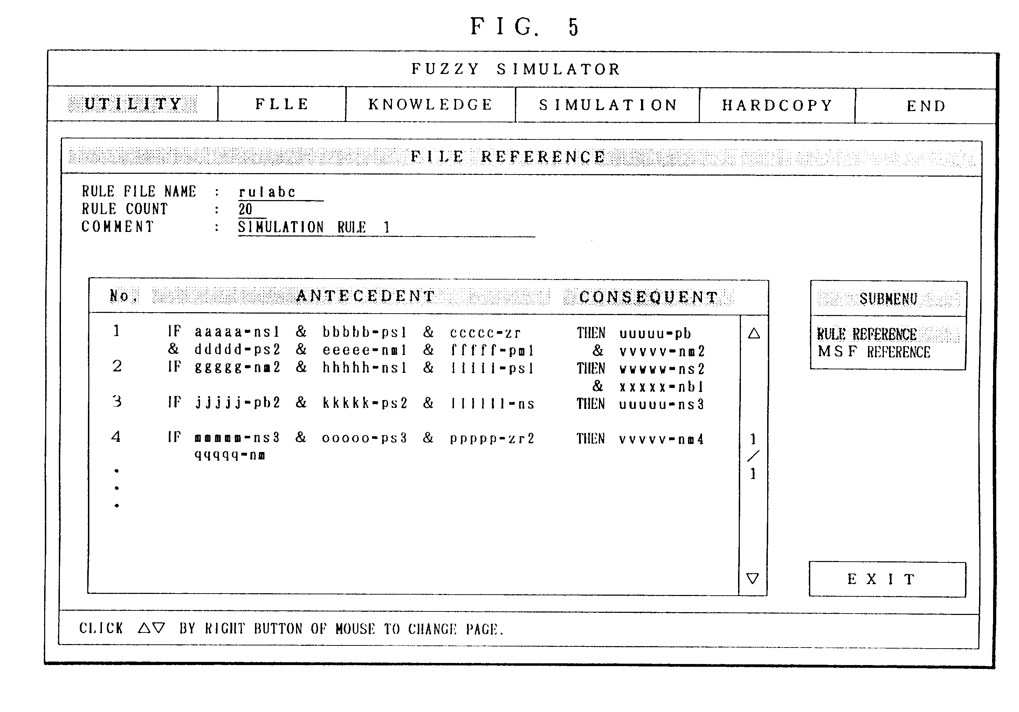

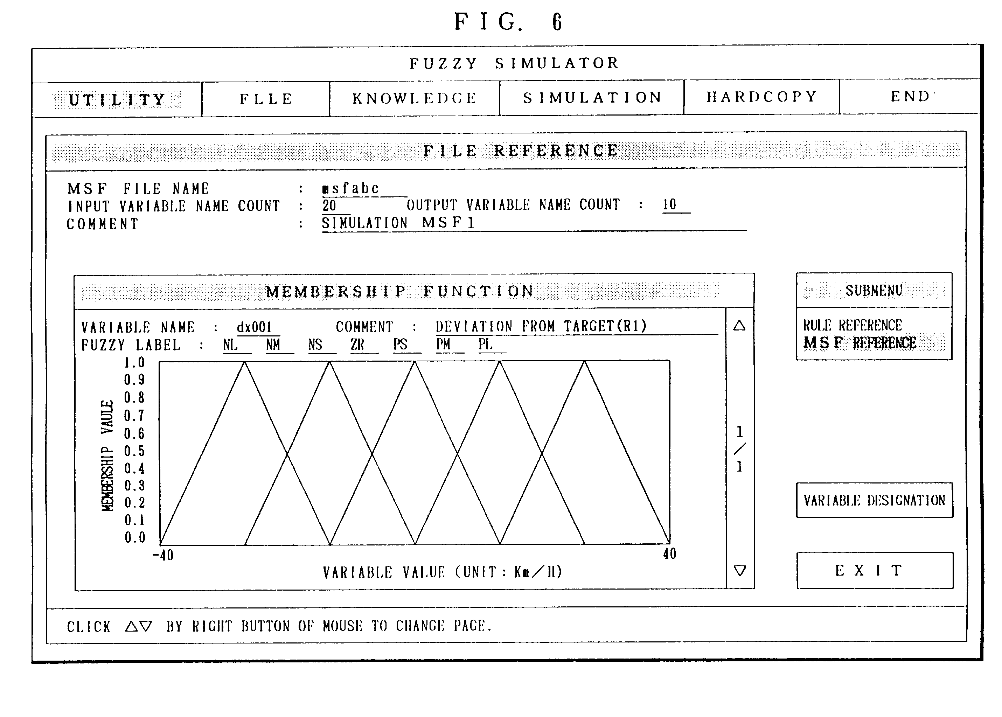

FIG. 3 is a configuration diagram showing in more detail a fuzzy control system development support apparatus in which there is particularly shown a software constitution. This apparatus may be implemented by use of, for example, a workstation. The apparatus operates on an operating system (OS), for example, UNIX. The operating system (UNIX) supervises a screen control for achieving a data editing and the like on a display screen, a graphic control for displaying a simulation result and the like on the display screen, and the man-machine interface. A knowledge setting section 50 is disposed to store the fuzzy processing rules and the membership functions in a knowledge base 5i. In the knowledge setting section 50, a fuzzy processing rule (to be simply referred to as a rule herebelow) is edited on the main memory and a membership function (MFS) is defined and is edited thereon. FIG. 4 shows an editing screen utilized when a membership function is edited by use of the knowledge setting section 50. In this display screen, the operator may input data items such as input/ output variable names, a fuzzy label, a comment, and lower and upper limit values of a variable name. FIG. 5 shows an editing screen employed when an inference processing rule is edited by the knowledge setting section 50. As can be seen from this diagram, in this display screen, the operator can input six conditions as the antecedent and two conclusions as the consequent. FIG. 6 shows a display screen in which a membership function inputted in the editing screen above in the utility mode is graphically displayed. In this screen, the file name of the membership function is indicated as msfabc. By using an input operation device such as a mouse, it is possible to change the page of the membership function file. The control of the input section including the mouse is achieved by the man-machine interface, whereas the graphic display operations such as the data editing and the membership function display on the display screen are supervised by the screen control and graphic control sections of the operating system.

The inference processing rules and membership functions stored in the knowledge base are translated to generate a file containing the contents of the knowledge base in an execution format in the execution format conversion or translation section 52. That is, based on the knowledge base, the contents thereof are converted, for example, by adding parameters such as those of inference methods, into data in a format executable by the fuzzy inference program. The execution file is then transmitted to the fuzzy inference section (to be simply referred to as an inference section herebelow) 53, which achieves a fuzzy inference on the received data to supply a result of the inference to the graphic control section.

A simple inference simulation is accomplished by means of the inference section 53 and the pseudo input section 54. The pseudo input section 54 supplies pseudo data to the knowledge base 51. Input data include the single data and the consecutive data, whereas the input format allows data including an integer, a real number, and an exponent data item. The consecutive data may be retained as an input data file. The pseudo data is subjected to an input editing by use of the screen control section. The result of an inference accomplished by the inference section 53 is sent to the graphic control section so as to be displayed as the final fuzzy output and determinant values. Incidentally, when pseudo data items are consecutively inputted, the inference results are attained as a graphic display with the X and Y axes representing the input data and the inference results, respectively.

In order to conduct a simulation of a control system, there are utilized a plant setting section 60 for establishing a model 61 of a plant as a control object, a simulation environment setting section 62, a plant computing section 63, an output section 64 for outputting a result of the simulation, the knowledge base 51, and the inference section 53.

For a simulation of the control system, as shown in the configuration of FIG. 2, a fuzzy inference engine set as a controller and a plant model established by use of parameters are configured in a control system of a closed loop, thereby achieving the simulation. This provision enables the fuzzy control to be simply evaluated.

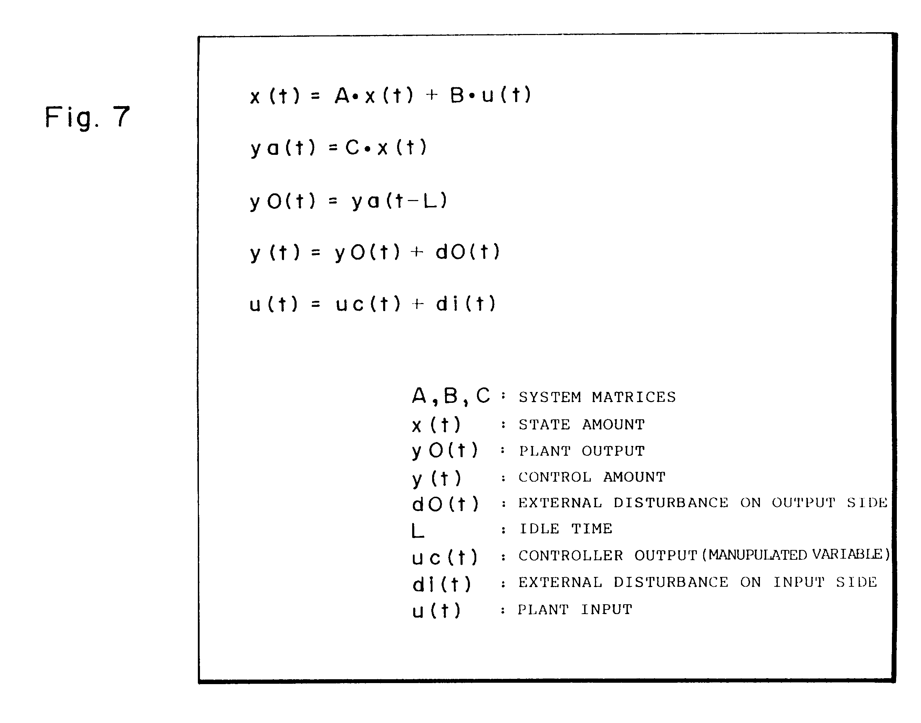

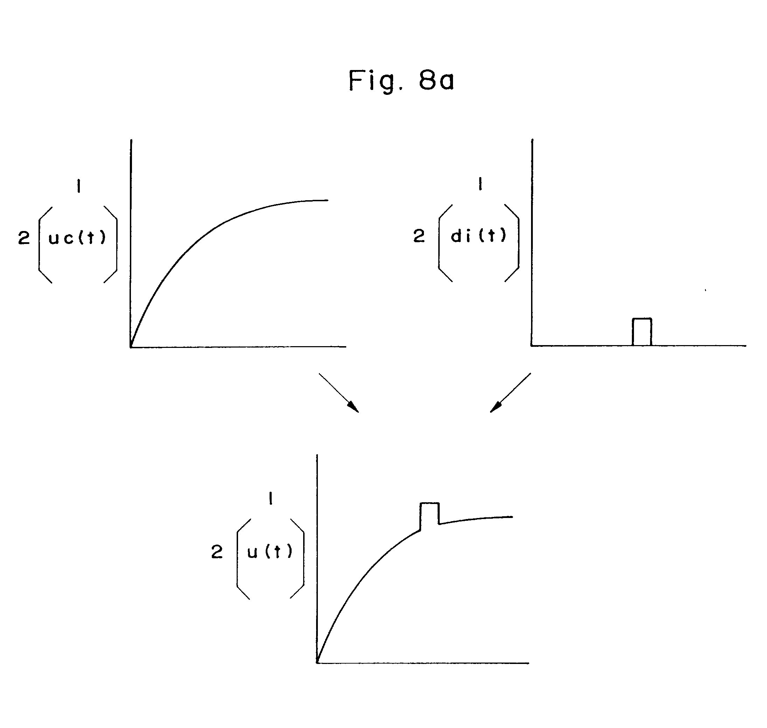

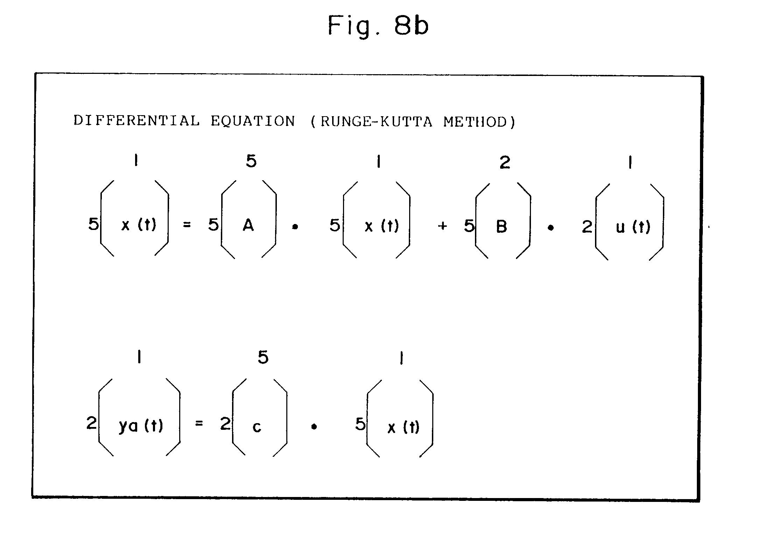

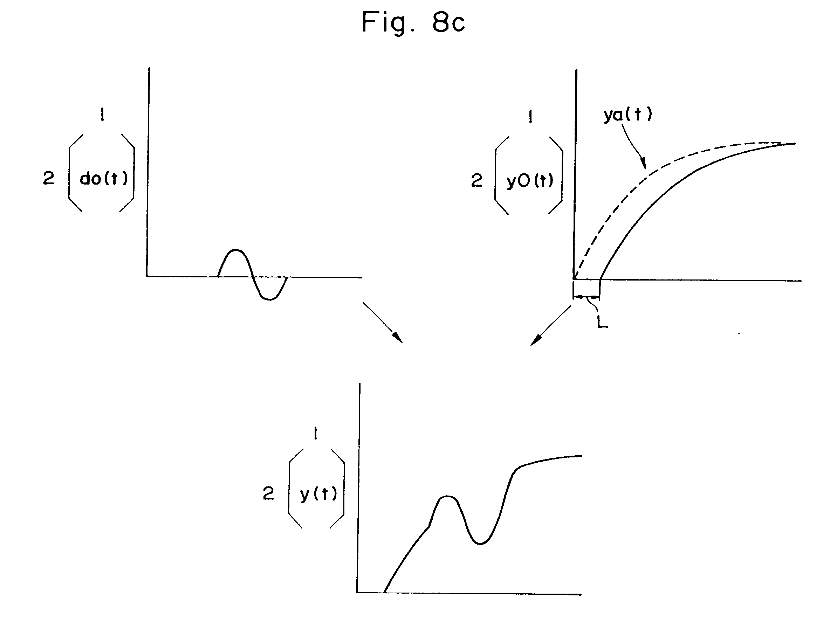

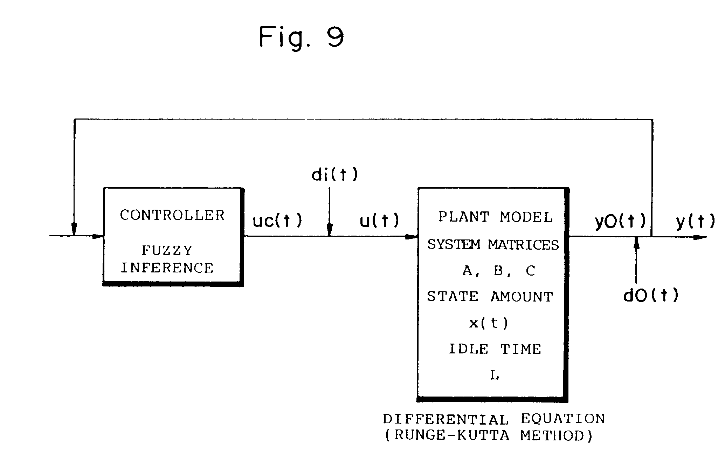

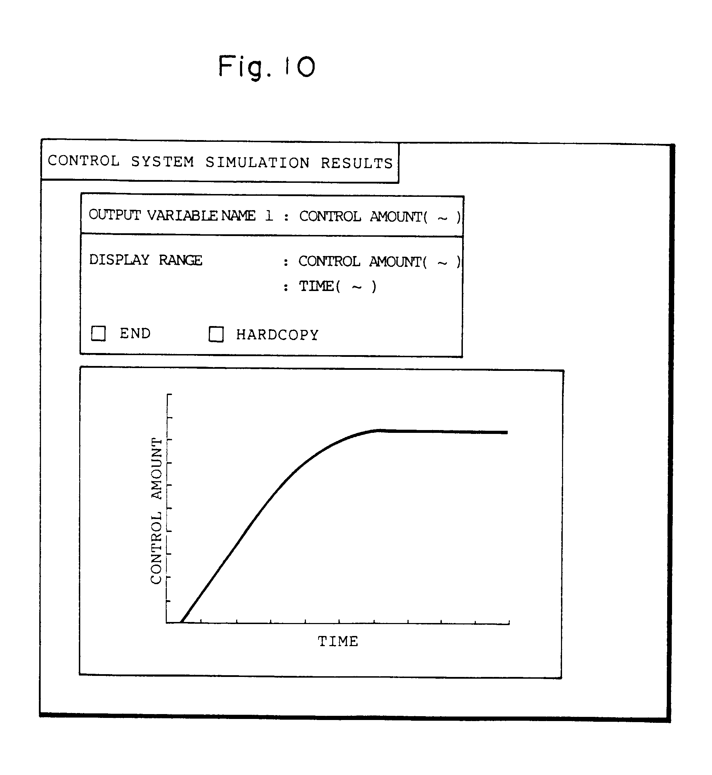

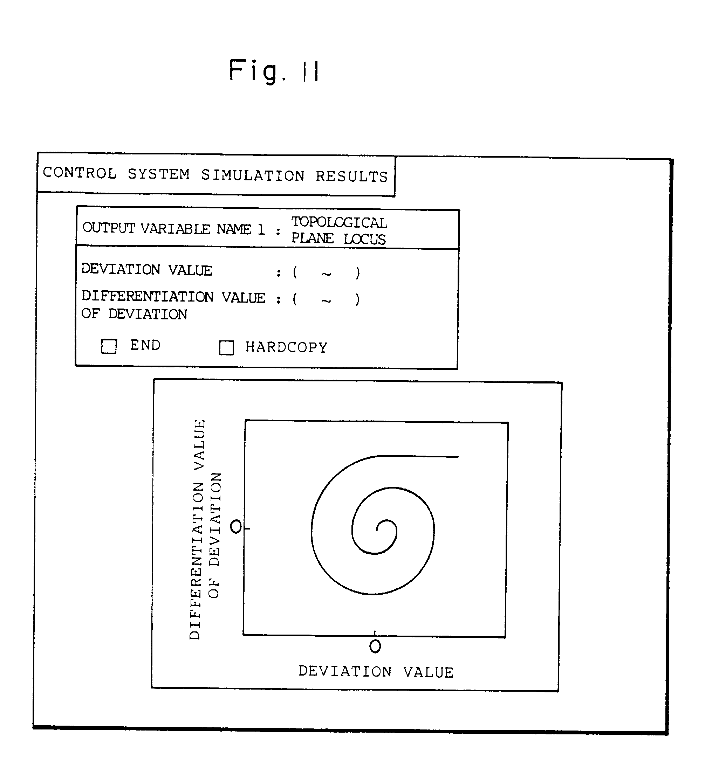

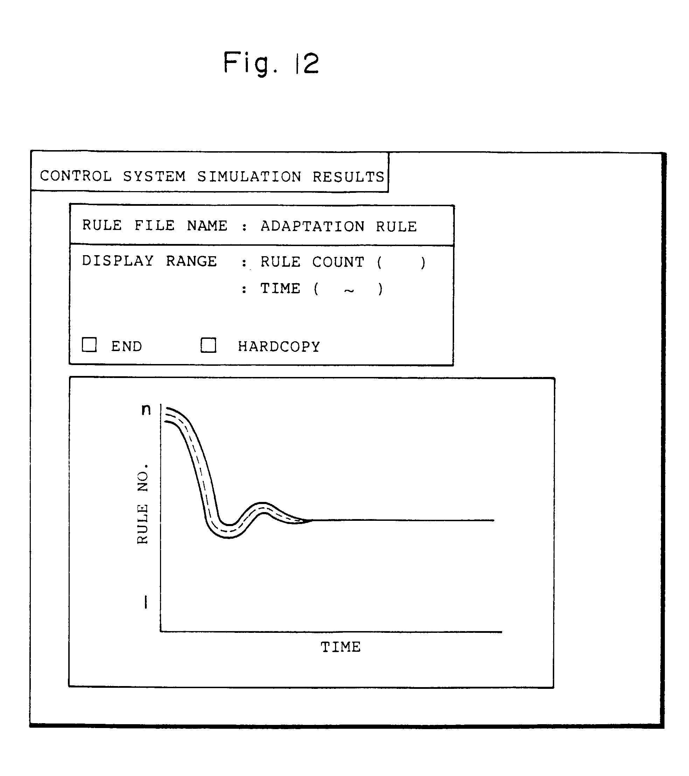

In the simulation of this control system, various kinds of enviromental conditions may be specified. The simulation environment setting section 62 is disposed for this purpose. That is, by use of key inputs, there can be set the environmental condition items such as a simulation period of time, a step of time (sampling period of time), a target value format (step response, lump response) and a magnitude or gradient, presence/absence of an external disturbance, a disturbance format (step, pulse, sine wave), a disturbance application position (the input or output side of model) and an application start and end points of time, a magnitude of the external disturbance, a frequency in a case of a sine wave, each initial state amount of the system degree, gains on input and output sides of the controller (fuzzy inference engine), and an output format (the position type to output a controller output itself or the velocity type to accumulate control outputs to attain a final output). The plant model 61 can be set through key-in operations of the system degree, the input/output degrees, and the idle time. The plant model 61 may be represented in a format shown in FIG. 7. The plant model 61 expressed with these differential equations and the inference section 53 are linked with each other through a closed loop. The plant model 61 is then supplied with an inference result as a control input, whereas the solutions of the differential equations representing the plant model 61 are returned as a plant output to the inference section 53. The closed loop computation is repeatedly achieved m times (m = simulation period of time/step period of time) such that the controller output (the output from the inference section 53) and the plant output at the respective iteration are kept as simulation results in the simulation result output section 64. By the way, it is assumed that the plant model 61 is represented with differential equations according to the Runge-Kutta method and the plant computation section 63 accomplishes the computation as shown in FIGS. 8a to 8c. FIG. 9 shows the closed loop control system. FIG. 8a shows a procedure to obtain an input to the plant model (control objective model). The differential equations are solved as shown in FIG. 8b. The control amount is obtained through the procedure of FIG. 8c. The simulation results thus attained are passed to the graphic control section, so that the respective data items of the controller output (manupulated variable) and the plant output are displayed as a graph in a time domain on a cathode-ray tube (CRT) screen. FIG. 10 is a diagram showing an example of simulation results of a plant output (control amount). Simulation results also include such items as those shown in FIGS. 11 and 12. FIG. 11 shows a screen graphically showing as a topological plane locus the differential values of the deviation with respect to the deviation values, whereas FIG. 12 shows adaptive degrees of fuzzy rules. Incidentally, particularly, in this embodiment as shown in FIG. 12, since the adaptive degree can be graphically shown for each rule, it is advantageously possible to evaluate the rule in a short period of time.

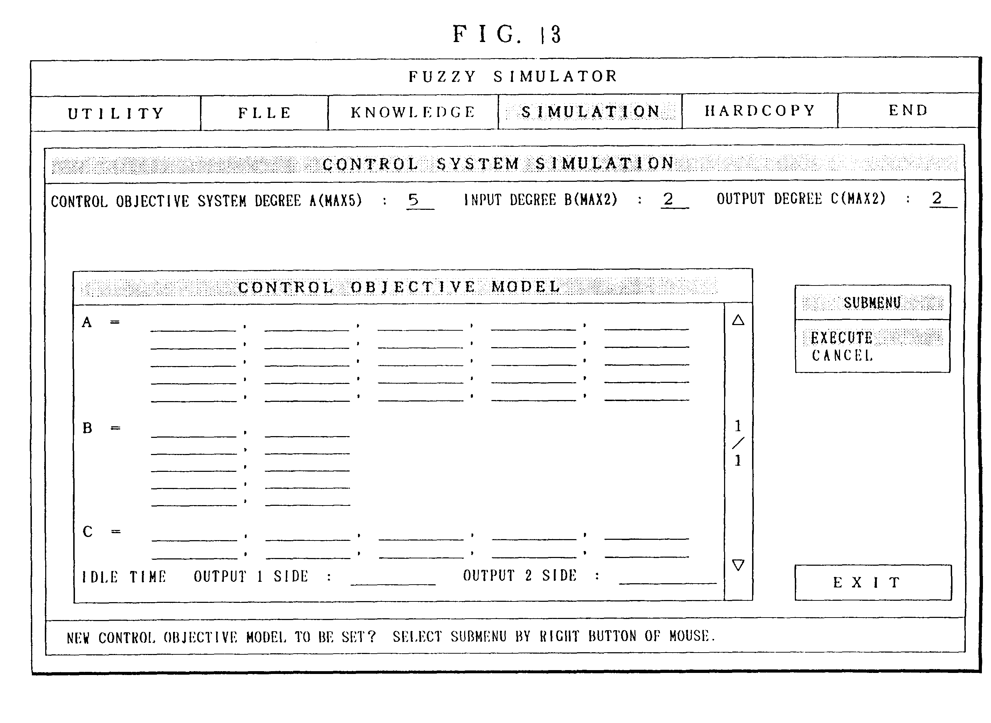

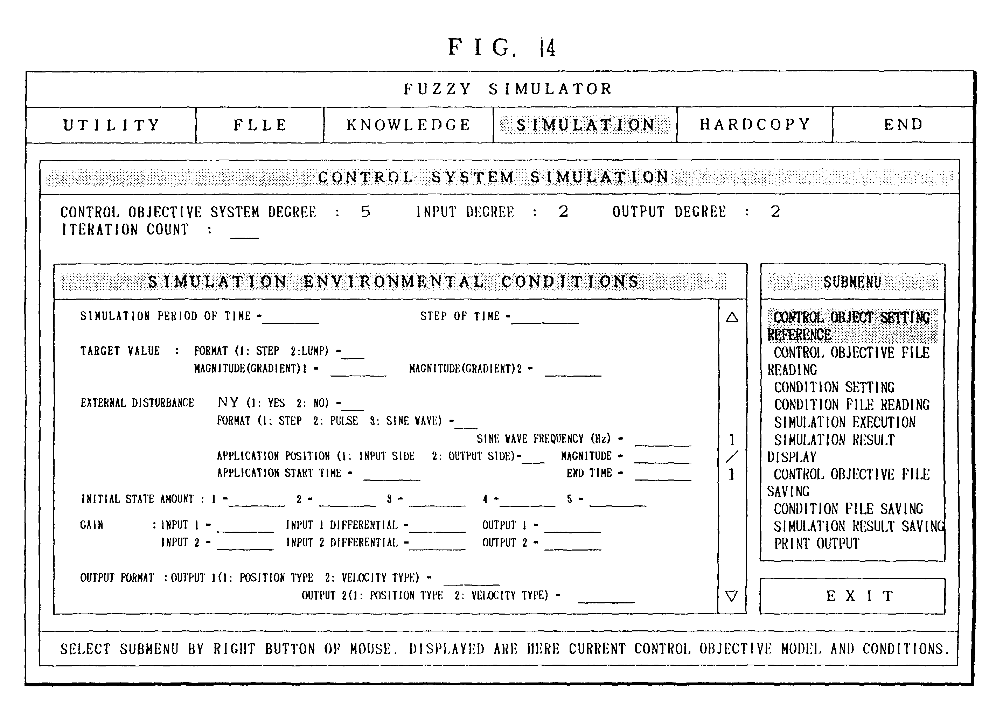

FIGS. 13 and 14 shows a screen employed to establish a plant model and a screen used to set a simulation environment condition.

Moreover, this system includes a translator 80 to translate the knowledge base 51 into the C language and an inference library 81 in which contents are beforehand prepared in the C languge. The C language translator 80 translates into source programs of the C language the rules and membership functions set in the knowledge setting section 50. The inference library 81 is to be loaded at least with the following items.

    ① Set data to an input variable.
    ② Execute an inference.
    ③ Read a value of an output variable.
    ④ Read a value of an input variable.
    ⑤ Dump various data items.

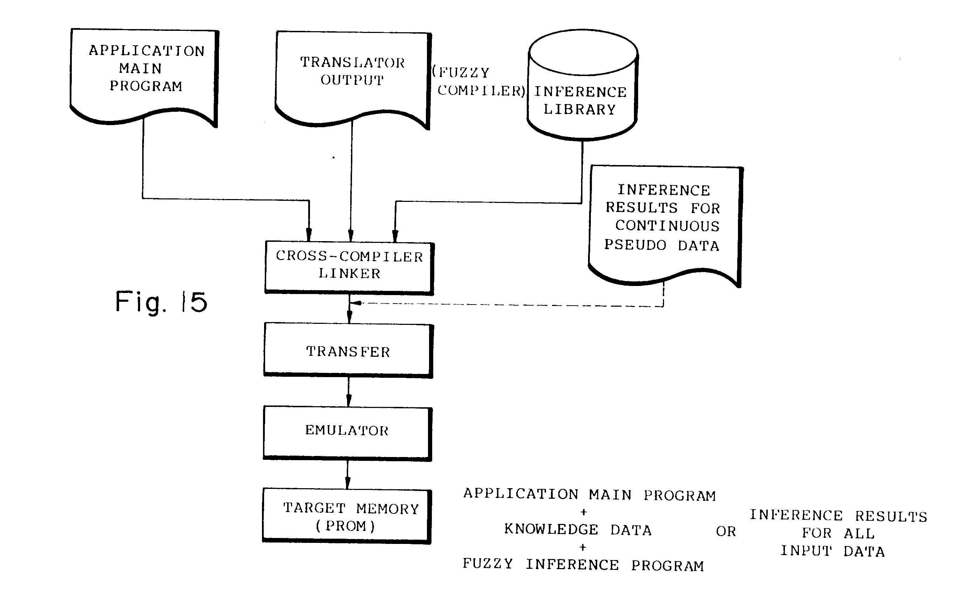

The contents of inference library 81 and the source programs of the C language thus translated and stored in the knowledge base by the C language translator 80 are used to develop application programs depending on various microprocessors. FIG. 15 shows a procedure employed when a software fuzzy program is stored in a target memory. An application program prepared in the C language, for example, a main program to control a temperature adjuster and the C language translator output and the inference library output respectively produced from the support apparatus shown as an embodiment in FIG. 3 are processed by use of a cross-compiler for a microprocessor as a target machine. The compilation results are further processed through a linker and a debugger to create an object program. The produced object program is then delivered to an emulator, which writes the object code of the program in a target memory, PROM. Through the procedure above, the fuzzy temperature adjuster control program is stored in the target memory. The target memory including the control program is installed in a controller board achieving a control of the temperature adjuster. By the way, in this system, since -inference results can be obtained for consecutive pseudo input data items, the inreference results can be directly stored through the emulator into the target memory. Also in this situation, the target memory is directly mounted, for use, on the CPU board of the actual machine.

**Claims**

1. A fuzzy control system development support apparatus characterized in that said apparatus comprises:

    a knowledge base (41, 51) storing therein fuzzy rules and membership functions previously set; simulation means (54, 70) for generating and supplying a pseudo input;

means (53, 71) for performing a fuzzy inference on said pseudo input supplied from said generating means in accordance with said fuzzy rules and membership functions stored in said knowledge base;

means (72) for outputting an inference result obtained by said inference performing means;

a display means (42, 50) for enabling the editing of said fuzzy rules and membership functions; and

translator means (44, 80) for translating said knowledge base into an arbitrary language.

2. The fuzzy control system development support apparatus in accordance with claim 1 characterized in that said simulation means generates and supplies a single pseudo input, and said inference performing means conducts a single inference operation.

3. The fuzzy control system development support apparatus in accordance with claim 1 characterized in that said simulation means generates and supplies consecutive pseudo inputs, and said inference performing means conducts consecutive inference operations.

4. The fuzzy control system development support apparatus in accordance with claim 3 characterized in that said output means provides a graphic display with two coordinate axes representing the pseudo input data and the consecutive inference results.

5. The fuzzy control system development support apparatus in accordance with claim 1 characterized in that the inference result obtained by said inference performing means is a determinant value.

6. The fuzzy control system development support apparatus in accordance with claim 1 characterized in that said apparatus further comprises:

input means (50) for inputting data defining a fuzzy rule and including conditions for an antecedent and a consequent of the fuzzy rule and data defining a membership function and including input and output variable names.

7. The fuzzy control system development support apparatus in accordance with claim 1 characterized in that said apparatus further comprises:

format conversion means (52) for converting the format of the fuzzy rules and membership functions stored in said knowledge base into a format executable by said inference performing means.

8. A method of supporting development of a fuzzy control system comprising the steps of:

preparing a knowledge base storing therein fuzzy rules and membership functions;

editing said fuzzy rules and membership functions on a display screen;

generating and supplying a pseudo input for simulation;

performing a fuzzy inference on said supplied pseudo input in accordance with said fuzzy rules and membership functions stored in said knowledge base;

outputting an inference result obtained by said performed fuzzy inference; and

translating said knowledge base into a required language.

9. The method of supporting development of the fuzzy control system in accordance with claim 8 characterized in that a single pseudo input is generated and supplied, and a single inference operation is conducted.

10. The method of supporting development of the fuzzy control system in accordance with claim 8 characterized in that consecutive pseudo inputs are generated and supplied, and consecutive inference operations are conducted.

11. The method of supporting development of the fuzzy control system in accordance with claim 10 characterized in that said method further comprises the step of providing a graphic display with two coordinate axes representing the pseudo input data and the consecutive inference results.

12. The method of supporting development of the fuzzy control system in accordance with claim 8 characterized in that the inference result obtained by said fuzzy inference is a determinant value.

13. The method of supporting development of the fuzzy control system in accordance with claim 8 characterized in that said method further comprises the step of inputting data defining a fuzzy rule and including conditions for an antecedent and a consequent of the fuzzy rule and data defining a membership function and including input and output variable names.

14. The method of supporting development of the fuzzy control system in accordance with claim 8 characterized in that said method further comprises the step of converting the format of the fuzzy rules and membership functions stored in said knowledge base into a format executable in said fuzzy inference.

**Patentansprüche**

1. Entwicklungsunterstützungsvorrichtung für ein Fuzzy-Steuerungssystem, dadurch gekennzeichnet, daß die Vorrichtung

   eine Wissensbank (41, 51), welche Fuzzy-Regeln und Zugehörigkeitsfunktionen, die vorher eingestellt worden sind, speichert,
   Simulationsmittel (54, 70) zur Erzeugung und Lieferung einer Pseudo-Eingabe,
   Mittel (53, 71) zur Durchführung einer Fuzzy-Schlußfolgerung auf der von den Erzeugungsmitteln gelieferten Pseudo-Eingabe nach Maßgabe der in der Wissensbank gespeicherten Fuzzy-Regeln und Zugehörigkeitsfunktionen,
   Mittel (72) zur Ausgabe eines mit den Schlußfolgerungsdurchführungsmitteln gewonnenen Schlußfolgerungsergebnisses,
   Anzeigemittel (42, 50) zur Ermöglichung der Editierung der Fuzzy-Regeln und Zugehörigkeitsfunktionen, und
   Übersetzermittel (44, 80) zum Übersetzen der Wissensbank in eine beliebige Sprache aufweist.

2. Entwicklungsunterstützungsvorrichtung für ein Fuzzy-Steuerungssystem nach Anspruch 1, dadurch gekennzeichnet, daß die Simulationsmittel eine einzige Pseudo-Eingabe erzeugen und liefern und die Schlußfolgerungsdurchführungsmittel eine einzige Schlußfolgerungsoperation durchführen.

3. Entwicklungsunterstützungsvorrichtung für ein Fuzzy-Steuerungssystem nach Anspruch 1, dadurch gekennzeichnet, daß die Simulationsmittel aufeinanderfolgende Pseudo-Eingaben erzeugen und liefern und die Schlußfolgerungsdurchführungsmittel aufeinanderfolgende Schlußfolgerungsoperationen durchführen.

4. Entwicklungsunterstützungsvorrichtung für ein Fuzzy-Steuerungssystem nach Anspruch 3, dadurch gekennzeichnet, daß die Ausgabemittel eine graphische Anzeige mit zwei Koordinatenachsen, die die Pseudo-Eingabedaten und die aufeinanderfolgenden Schlußfolgerungsergebnisse darstellen, liefern.

5. Entwicklungsunterstützungsvorrichtung für ein Fuzzy-Steuerungssystem nach Anspruch 1, dadurch gekennzeichnet, daß das mit den Schlußfolgerungsdurchführungsmitteln gewonnene Schlußfolgerungsergebnis ein determinierender Wert ist.

6. Entwicklungsunterstützungsvorrichtung für ein Fuzzy-Steuerungssystem nach Anspruch 1, dadurch gekennzeichnet, daß die Vorrichtung ferner

   Eingabemittel (50) zum Eingeben von Daten, die eine Fuzzy-Regel definieren und Bedingungen für einen Vordersatz und einen Hintersatz der Fuzzy-Regel enthalten, und von Daten, die eine Zugehörigkeitsfunktion definieren und Eingabe- und Ausgabevariablennamen enthalten, aufweist.

7. Entwicklungsunterstützungsvorrichtung für ein Fuzzy-Steuerungssystem nach Anspruch 1, dadurch gekennzeichnet, daß die Vorrichtung ferner

   Formatumwandlungsmittel (52) zum Umwandeln des Formats der in der Wissensbank gespeicherten Fuzzy-Regeln und Zugehörigkeitsfunktionen in ein Format, welches mit den Schlußfolgerungsdurchführungsmitteln ausführbar ist, aufweist.

8. Verfahren zur Unterstützung der Entwicklung eines Fuzzy-Steuerungssystems mit den Verfahrensschritten des

   Erstellens einer Wissensbank, welche Fuzzy-Regeln und Zugehörigkeitsfunktionen speichert,
   Editierens der Fuzzy-Regeln und Zugehörigkeitsfunktionen auf einem Anzeigebildschirm,
   Erzeugens und Lieferns einer Pseudo-Eingabe für Simulation,
   Durchführens einer Fuzzy-Schlußfolgerung auf der gelieferten Pseudo-Eingabe nach Maßgabe der in der Wissensbank gespeicherten Fuzzy-Regeln und Zugehörigkeitsfunktionen,
   Ausgebens eines mit der durchgeführten Fuzzy-Schlußfolgerung gewonnenen Schlußfolgerungsergebnisses, und
   Übersetzens der Wissensbank in eine geforderte Sprache.

9. Verfahren zur Unterstützung der Entwicklung eines Fuzzy-Steuerungssystems nach Anspruch 8, dadurch gekennzeichnet, daß eine einzige Pseudo-Eingabe erzeugt und geliefert wird und eine einzige Schlußfolgerungsoperation durchgeführt wird.

10. Verfahren zur Unterstützung der Entwicklung eines Fuzzy-Steuerungssystems nach Anspruch 8, dadurch gekennzeichnet, daß aufeinanderfolgende Pseudo-Eingaben erzeugt und geliefert werden und aufeinanderfolgende Schlußfolgerungsoperationen durchgeführt werden.

11. Verfahren zur Unterstützung der Entwicklung eines Fuzzy-Steuerungssystems nach Anspruch 10, dadurch gekennzeichnet, daß das Verfahren ferner den Schritt des Schaffens einer graphischen Anzeige mit zwei Koordinatenachsen, die die Pseudo-Eingabedaten und die aufeinanderfolgenden Schlußfolgerungsergebnisse darstellen, aufweist.

12. Verfahren zur Unterstützung der Entwicklung eines Fuzzy-Steuerungssystems nach Anspruch 8, dadurch gekennzeichnet, daß das mit der Fuzzy-Schlußfolgerung gewonnene Ergebnis ein determinierender Wert ist.

13. Verfahren zur Unterstützung der Entwicklung eines Fuzzy-Steuerungssystems nach Anspruch 8, dadurch gekennzeichnet, daß das Verfahren ferner den Schritt des Eingebens von Daten, die eine Fuzzy-Regel definieren und Bedingungen für einen Vordersatz und einen Hintersatz der Fuzzy-Regel enthalten, und von Daten, die eine Zugehörigkeitsfunktion definieren und Eingabe- und Ausgabevariablennamen enthalten, aufweist.

14. Verfahren zur Unterstützung der Entwicklung eines Fuzzy-Steuerungssystems nach Anspruch 8, dadurch gekennzeichnet, daß das Verfahren ferner den Schritt der Umwandlung des Formats der in der Wissensbank gespeicherten Fuzzy-Regeln und Zugehörigkeitsfunktionen in ein bei der Fuzzy-Schlußfolgerung ausführbares Format aufweist.

**Revendications**

1. Appareil d'aide à la réalisation d'un système de commande à logique floue, caractérisé en ce que ledit appareil comprend:

une base de connaissance (41, 51), contenant dans celle-ci des règles floues et des fonctions d'appartenance déterminées précédemment;
des moyens de simulation (54, 70), pour générer et délivrer une pseudo-entrée;
des moyens (53, 71), pour exécuter une inférence floue sur ladite pseudo-entrée délivrée par lesdits moyens de génération, conformément auxdites règles floues et fonctions d'appartenance stockées dans ladite base de connaissance;
des moyens (72), pour délivrer en sortie un résultat d'inférence obtenu par lesdits moyens d'exécution d'inférence;
des moyens d'affichage (42, 50), pour activer l'édition desdites règles floues et fonctions d'appartenance; et
des moyens traducteurs (44, 80), pour traduire ladite base de connaissance en une langue arbitraire.

2. Appareil d'aide à la réalisation d'un système de commande à logique floue selon la revendication 1, caractérisé en ce que lesdits moyens de simulation génèrent et délivrent une pseudo-entrée unique, et lesdits moyens d'exécution d'inférence dirigent une opération d'inférence unique.

3. Appareil d'aide à la réalisation d'un système de commande à logique floue selon la revendication 1, caractérisé en ce que lesdits moyens de simulation génèrent et délivrent des pseudo-entrées consécutives, et lesdits moyens d'exécution d'inférence dirigent des opérations d'inférence consécutives.

4. Appareil d'aide à la réalisation d'un système de commande à logique floue selon la revendication 3, caractérisé en ce que lesdits moyens de sortie délivrent un affichage graphique avec deux axes de coordonnées représentant les données de pseudo-entrée et les résultats d'inférence consécutifs.

5. Appareil d'aide à la réalisation d'un système de commande à logique floue selon la revendication 1, caractérisé en ce que le résultat d'inférence obtenu par lesdits moyens d'exécution d'inférence est une valeur de déterminant.

6. Appareil d'aide à la réalisation d'un système de commande à logique floue selon la revendication 1, caractérisé en ce que ledit appareil comprend en outre:

des moyens d'entrée (50), pour appliquer en entrée des données définissant une règle floue et comportant des conditions pour un antécédent et une conséquence de la règle floue, et des données définissant une fonction d'appartenance et comportant des noms de variables d'entrée et de sortie.

7. Appareil d'aide à la réalisation d'un système de commande à logique floue selon la revendication 1, caractérisé en ce que ledit appareil comprend en outre:

des moyens de conversion de format (52), pour convertir le format des règles floues et des fonctions d'appartenance stockées dans ladite base de connaissance en un format exécutable par lesdits moyens d'exécution d'inférence.

8. Procédé d'aide à la réalisation d'un système de commande à logique floue comprenant les étapes consistant à:

confectionner une base de connaissance, contenant dans celle-ci des règles floues et des fonctions d'appartenance;
éditer lesdites règles floues et fonctions d'appartenance sur un écran d'affichage;

générer et délivrer une pseudo-entrée pour une simulation;

exécuter une inférence floue sur ladite pseudo-entrée, conformément auxdites règles floues et fonctions d'appartenance stockées dans ladite base de connaissance;

délivrer en sortie un résultat d'inférence obtenu par ladite inférence floue exécutée;

traduire ladite base de connaissance en une langue requise.

9. Procédé d'aide à la réalisation d'un système de commande à logique floue selon la revendication 8, caractérisé en ce qu'une pseudo-entrée unique est générée et délivrée, et une opération d'inférence unique est dirigée.

10. Procédé d'aide à la réalisation d'un système de commande à logique floue selon la revendication 8, caractérisé en ce que des pseudo-entrées consécutives sont générées et délivrées, et des opérations d'inférence consécutives sont dirigées.

11. Procédé d'aide à la réalisation d'un système de commande à logique floue selon la revendication 10, caractérisé en ce que ledit procédé comprend en outre l'étape consistant à fournir un affichage graphique avec deux axes de coordonnées représentant les données de pseudo-entrée et les résultats d'inférence consécutifs.

12. Procédé d'aide à la réalisation d'un système de commande à logique floue selon la revendication 8, caractérisé en ce que le résultat d'inférence obtenu par ladite inférence floue est une valeur de déterminant.

13. Procédé d'aide à la réalisation d'un système de commande à logique floue selon la revendication 8, caractérisé en ce que ledit procédé comprend en outre l'étape consistant à appliquer en entrée des données définissant une règle floue et comportant des conditions pour un antécédent et une conséquence de la règle floue, et des données définissant une fonction d'appartenance et comportant des noms de variables d'entrée et de sortie.

14. Procédé d'aide à la réalisation d'un système de commande à logique floue selon la revendication 8, caractérisé en ce que ledit procédé comprend en outre l'étape consistant à convertir le format des règles floues et des fonctions d'appartenance stockées dans ladite base de connaissance en un format exécutable par ladite inférence floue.

Fig.1

Fig. 2

DISPLAY SCREEN — 42

KNOWLEDGE BASE — 41

43a

PSEUDO INPUT GENERATOR — 70

72 — OUTPUT

43

FUZZY INFERENCE SECTION — 71

CONTROL OBJECTIVE MODEL — 73

OUTPUT — 74

43b

TRANSLATOR (C LANGUAGE ETC.) — 44

EXTERNAL STORAGE

EP 0 373 628 B1

12

Fig. 3

SCREEN CONTROL

PLANT SETTING  60

PLANT MODEL  61

PLANT COMPU- TATION  63

SIMULATION RESULT OUTPUT  64

SIMULATION ENVIRONMENT SETTING  62

PSEUDO INPUT  54

KNOWLEDGE SETTING  50

KNOWLEDGE BASE  51

EXECUTION FORMAT CONVERSION  52

INFERENCE  53

INFERENCE LIBRARY  81

C LANGUAGE TRANSLATOR  80

GRAPHIC CONTROL

MAN-MACHINE INTERFACE

EP 0 373 628 B1

# FIG. 4

EP 0 373 628 B1

| FUZZY SIMULATOR | | | | | |
|---|---|---|---|---|---|
| UTILITY | FLLE | KNOWLEDGE | SIMULATION | HARDCOPY | END |

## FILE REFERENCE

MSF FILE NAME          :  msfabc

INPUT VORIABLE NAME COUNT  :  20      OUTPUT VARIABLE NAME COUNT  :  10

COMMENT               :  SIMULATION MSF1

| VARIABLE NAME | I／O | UNIT | LOWER LIMIT VALUE | UPPER LIMIT VALUE | COMMENT／FUZZY LABEL |
|---|---|---|---|---|---|
| ■ dx001 | i | Km／H | −40 | 40 | DEVIATION FROM TARGET(R1)<br>NL NM NS ZR PS PM PL |
| ☐ ddx01 | i | Km／H | −5 | 5 | DIFFERENTIAL OF dx001<br>NL NM NS ZR PS PM PL |
| ☐ out01 | o | V | −12 | 12 | MANIPULATED VARIABLE 1<br>NL NM NS ZR PS PM PL |

SUBMENU

RULE REFERENCE
MSF REFERENCE

△
1／1
▽

EXIT

CLICK ☐ BY RIGHT BATTON OF MOUSE TO SELERT VARIABLE NAME.

# FIG. 5

## FUZZY SIMULATOR

| UTILITY | FLLE | KNOWLEDGE | SIMULATION | HARDCOPY | END |
|---|---|---|---|---|---|

### FILE REFERENCE

RULE FILE NAME : rulabc
RULE COUNT    : 20
COMMENT       : SIMULATION RULE 1

| No. | ANTECEDENT | CONSEQUENT | | SUBMENU |
|---|---|---|---|---|

```
  1   IF  aaaaa-ns1  &  bbbbb-ps1  &  ccccc-zr     THEN  uuuuu-pb     △
      &   ddddd-ps2  &  eeeee-nm1  &  fffff-pm1      &   vvvvv-nm2
  2   IF  ggggg-nm2  &  hhhhh-ns1  &  iiiii-ps1    THEN  wwwww-ns2
                                                     &   xxxxx-nb1
  3   IF  jjjjj-pb2  &  kkkkk-ps2  &  lllll-ns     THEN  uuuuu-ns3

  4   IF  mmmmm-ns3  &  ooooo-ps3  &  ppppp-zr2    THEN  vvvvv-nm4    1
      qqqqq-nm                                                       /
   •                                                                 1
   •
   •
   •
                                                                     ▽
```

SUBMENU: RULE REFERENCE / MSF REFERENCE

EXIT

CLICK △▽ BY RIGHT BUTTON OF MOUSE TO CHANGE PAGE.

# FIG. 6

**FUZZY SIMULATOR**

| UTILITY | FLLE | KNOWLEDGE | SIMULATION | HARDCOPY | END |
|---------|------|-----------|------------|----------|-----|

**FILE REFERENCE**

MSF FILE NAME : ■sfabc

INPUT VARIABLE NAME COUNT : 20    OUTPUT VARIABLE NAME COUNT : 10

COMMENT : SIMULATION MSF 1

**MEMBERSHIP FUNCTION**

VARIABLE NAME : dx001    COMMENT : DEVIATION FROM TARGET(R1)

FUZZY LABEL : NL    NM    NS    ZR    PS    PM    PL

MEMBERSHIP VAULE

1.0
0.9
0.8
0.7
0.6
0.5
0.4
0.3
0.2
0.1
0.0

-40                                                              40

VARIABLE VALUE (UNIT : Km/H)

△

1/1

▽

SUBMENU

RULE REFERENCE

MSF REFERENCE

VARIABLE DESIGNATION

EXIT

CLICK △▽ BY RIGHT BUTTON OF MOUSE TO CHANGE PAGE.

EP 0 373 628 B1

Fig. 7

$$x(t) = A \cdot x(t) + B \cdot u(t)$$

$$ya(t) = C \cdot x(t)$$

$$yO(t) = ya(t-L)$$

$$y(t) = yO(t) + dO(t)$$

$$u(t) = uc(t) + di(t)$$

| | |
|---|---|
| $A, B, C$ | : SYSTEM MATRICES |
| $x(t)$ | : STATE AMOUNT |
| $yO(t)$ | : PLANT OUTPUT |
| $y(t)$ | : CONTROL AMOUNT |
| $dO(t)$ | : EXTERNAL DISTURBANCE ON OUTPUT SIDE |
| $L$ | : IDLE TIME |
| $uc(t)$ | : CONTROLLER OUTPUT (MANUPULATED VARIABLE) |
| $di(t)$ | : EXTERNAL DISTURBANCE ON INPUT SIDE |
| $u(t)$ | : PLANT INPUT |

EP 0 373 628 B1

## Fig. 8a

# Fig. 8b

DIFFERENTIAL EQUATION (RUNGE-KUTTA METHOD)

$$5\left(\dot{x}(t)\right) = 5\left(A\right) \cdot 5\left(x(t)\right) + 5\left(B\right) \cdot 2\left(u(t)\right)$$

$$2\left(ya(t)\right) = 2\left(c\right) \cdot 5\left(x(t)\right)$$

EP 0 373 628 B1

Fig. 8c

# Fig. 9

CONTROLLER

FUZZY
INFERENCE

di(t)

uc(t)　　u(t)

PLANT MODEL

SYSTEM MATRICES

A, B, C

STATE AMOUNT

x(t)

IDLE TIME

L

yO(t)　y(t)

dO(t)

DIFFERENTIAL EQUATION
(RUNGE-KUTTA METHOD)

# Fig. 10

CONTROL SYSTEM SIMULATION RESULTS

OUTPUT VARIABLE NAME 1 : CONTROL AMOUNT( ~ )

DISPLAY RANGE             : CONTROL AMOUNT( ~ )
                          : TIME( ~ )

☐  END          ☐  HARDCOPY

# Fig. II

CONTROL SYSTEM SIMULATION RESULTS

OUTPUT VARIABLE NAME 1 : TOPOLOGICAL PLANE LOCUS

DEVIATION VALUE : ( ~ )

DIFFERENTIATION VALUE : ( ~ )
OF DEVIATION

☐ END     ☐ HARDCOPY

DIFFERENTIATION VALUE
OF DEVIATION

DEVIATION VALUE

# Fig. 12

CONTROL SYSTEM SIMULATION RESULTS

RULE FILE NAME : ADAPTATION RULE

DISPLAY RANGE : RULE COUNT (     )

: TIME (   ~   )

☐ END      ☐ HARDCOPY

RULE NO.

n

I

TIME

# FIG. 13

EP 0 373 628 B1

| FUZZY SIMULATOR | | | | | |
|---|---|---|---|---|---|
| UTILITY | FLLE | KNOWLEDGE | SIMULATION | HARDCOPY | END |

### CONTROL SYSTEM SIMULATION

CONTROL OBJECTIVE SYSTEM DEGREE A(MAX5) : 5    INPUT DEGREE B(MAX2) : 2    OUTPUT DEGREE C(MAX2) : 2

#### CONTROL OBJECTIVE MODEL

A =  _____ . _____ , _____ , _____ , _____
    _____ ; _____ ; _____ ; _____ ; _____
    _____ ; _____ ; _____ ; _____ ; _____
    _____ ; _____ ; _____ ; _____ ; _____
    _____ ; _____ ; _____ ; _____ ; _____

B =  _____ ; _____
    _____ ; _____
    _____ ; _____
    _____ ; _____
    _____ ; _____

C =  _____ , _____ , _____ , _____ , _____
    _____ , _____ , _____ , _____ , _____

IDLE TIME   OUTPUT 1 SIDE : _____    OUTPUT 2 SIDE : _____

| SUBMENU |
|---|
| EXECUTE |
| CANCEL |

△

1 / 1

▽

EXIT

NEW CONTROL OBJECTIVE MODEL TO BE SET? SELECT SUBMENU BY RIGHT BUTTON OF MOUSE.

# F I G.  14

EP 0 373 628 B1

| FUZZY SIMULATOR |
| --- |

| UTILITY | FLLE | KNOWLEDGE | SIMULATION | HARDCOPY | END |
| --- | --- | --- | --- | --- | --- |

CONTROL SYSTEM SIMULATION

CONTROL OBJECTIVE SYSTEM DEGREE  :  5      INPUT DEGREE  :  2      OUTPUT DEGREE  :  2
ITERATION COUNT  :  ___

SIMULATION ENVIRONMENTAL CONDITIONS

SUBMENU

SIMULATION PERIOD OF TIME - _____          STEP OF TIME - _____

TARGET VALUE  :  FORMAT (1: STEP  2:LUMP) - ___
                 MAGNITUDE(GRADIENT)1 - _____      MAGNITUDE(GRADIENT)2 - _____

EXTERNAL DISTURBANCE    NY (1: YES  2: NO) - ___
                        FORMAT (1: STEP  2: PULSE  3: SINE WAVE) - ___
                                                        SINE WAVE FREQUENCY (Hz) - _____
                        APPLICATION POSITION (1: INPUT SIDE   2: OUTPUT SIDE)- ___   MAGNITUDE - _____
                        APPLICATION START TIME - _____          END TIME - _____

INITIAL STATE AMOUNT : 1 - _____    2 - _____    3 - _____    4 - _____    5 - _____

GAIN        : INPUT 1 - _____    INPUT 1 DIFFERENTIAL - _____    OUTPUT 1 - _____
              INPUT 2 - _____    INPUT 2 DIFFERENTIAL - _____    OUTPUT 2 - _____

OUTPUT FORMAT : OUTPUT 1(1: POSITION TYPE  2: VELOCITY TYPE) - _____
                        OUTPUT 2(1: POSITION TYPE  2: VELOCITY TYPE) - _____

Submenu list:
- CONTROL OBJECT SETTING REFERENCE
- CONTROL OBJECTIVE FILE READING
- CONDITION SETTING
- CONDITION FILE READING
- SIMULATION EXECUTION
- SIMULATION RESULT DISPLAY
- CONTROL OBJECTIVE FILE SAVING
- CONDITION FILE SAVING
- SIMULATION RESULT SAVING
- PRINT OUTPUT

EXIT

SELECT SUBMENU BY RIGHT BUTTON OF MOUSE. DISPLAYED ARE HERE CURRENT CONTROL OBJECTIVE MODEL AND CONDITIONS.

Fig. 15

| APPLICATION MAIN PROGRAM | | |
| + | | |
| KNOWLEDGE DATA | OR | INFERENCE RESULTS |
| + | | FOR ALL |
| FUZZY INFERENCE PROGRAM | | INPUT DATA |

EP 0 373 628 B1

**Fig. 16a**

LUBEWARM  APPROPRIATE TEMPERATURE  HOT

ENVIRONMENTAL TEMPERATURE 20°C

38    40    42    44    46 TEMPERATURE(°C)

**Fig. 16b**

LUBEWARM  APPROPRIATE TEMPERATURE  HOT

ENVIRONMENTAL TEMPERATURE 30°C

38    40    42    44    46 TEMPERATURE(°C)

**Fig. 16c**

LUBEWARM  APPROPRIATE TEMPERATURE  HOT

ENVIRONMENTAL TEMPERATURE 10°C

38    40    42    44    46 TEMPERATURE(°C)

**Fig. 17**

LUBEWARM  APPROPRIATE TEMPERATURE  HOT

38    40    42    44    46 TEMPERATURE(°C)

## Fig. 18

EXCEPTION SIGNAL ─────────────────────────────┐

SIGNAL FROM SENSOR ETC. ⟹ 
**FUZZY INFERENCE APPARATUS** ⟋91 → **FINAL DECISION SECTION** 92 → ABNORMAL OUTPUT
→ FINAL OUTPUT

## Fig. 19

EXCEPTION SIGNAL ───→

SIGNAL FROM SENSOR ETC. ⟹ **FUZZY INFERENCE APPARATUS** ⟍93 → ABNORMAL OUTPUT
→ FINAL OUTPUT

EP 0 373 628 B1